# EUROPEAN PATENT SPECIFICATION

(11) **EP 1 058 018 B1**
(45) Date of publication and mention of the grant of the patent: **27.06.2007**
(21) Application number: 00830330.7
(22) Date of filing: 05.05.2000
(51) Int. Cl.: F16D 13/04

(54) **Plate-type clutch with helical means for dynamically adjusting the axial compression load on the plates**
Lamellenkupplung mit einer schraubenförmigen Einrichtung zur dynamischen Anpassung des Platten-Anpressdruckes
Embrayage multi-disques avec dispositif hélicoidal pour le réglage de la compression axiale sur les disques

(30) Priority: 18.05.1999 IT MI991083
(43) Date of publication of application: 06.12.2000
(73) Proprietor: ADLER S.p.A., 38068 Rovereto (Trento) (IT)
(72) Inventor: Morone, Alfio Ersilio, 20129 Milano (IT)
(74) Representative: Bosotti, Luciano

(56) References cited:
- DE-A- 1 941 683
- FR-E- 30 061
- GB-A- 419 513

## Description

The present invention relates to a plate-type clutch comprising means for adjusting the compressive force in the axial direction of the plates with the variation of the torque to be transmitted.

In the field of the transmission of motion from a driving shaft to a driven shaft, it is known that it is necessary to insert between the shafts a device (clutch) for coupling them, which, by means of an axial movement, enables the two shafts to be coupled or uncoupled with respect to rotation.

It is also known that the essential elements of the said clutches consist of sets of steel plates, integral with the hub of the driven or driving shaft, alternating with plates, covered in friction material, integral with a housing which in turn is connected to the driving or driven shaft; these plates, when compressed in the axial direction by corresponding thrust means, cause the torque to be transmitted from the driving shaft to the driven shaft.

As the axial thrust applied to the plates increases, there will be a corresponding increase in the torque transmitted by the clutch.

Consequently, thrust devices based on the use of springs axially interposed between the hub of the driven shaft and an element exerting thrust in the axial direction have been developed, and are used, for example, in the field of two-wheeled vehicles, the load increasing proportionally to the maximum torque which can be developed and which is to be transmitted to the driven shaft, in other words to the driving wheel of the motor cycle through the gearbox.

However, the high pressure of the thrust spring, although useful for the transmission of a higher torque, gives rise to certain problems, including:
- the fact that the pressure of the springs, being fixed, has to be pre-set to a maximum value such that the maximum value of torque supplied by the engine can be transmitted, and
- the fact that the pressure of the thrust spring is also that which opposes the disengagement of the clutch which, in the field of motor cycles, is caused by a manual operation by the rider of the control lever located on the handlebar; an excessive pressure of the springs required by a high value of torque therefore makes the control lever extremely stiff to operate;
- the fact that, when the torque is reversed, the high value of the spring pressure maintains a high value of torque which, in the case of two-wheeled vehicles, can cause locking and/or slipping of the driving wheel.

Consequently, technical solutions have been proposed with the aim of making the pressure of the axial thrust springs vary with the variation of the torque to be transmitted, these solutions being based on the interposition of auxiliary elements, such as face cams and the like positioned between the hub of the driven shaft and the pressure plates, which, as the torque on the driving shaft increases, press axially against the thrust springs, thus causing a greater compression of the springs and a corresponding increase in the thrust pressure, with a consequent increase in the torque which can be transmitted by the clutch.

These known solutions, which act on the thrust springs, do not satisfactorily resolve the problems of the clutch, since:
- as the torque increases, the pressure of the springs also increases and consequently the force required to operate the clutch disengagement control lever increases, this problem becoming even more significant in oil bath (wet) clutches in which the coefficient of friction is decreased drastically, requiring a further increase in the pressure of the springs;
- they do not operate satisfactorily as torque limiters when the engine torque is reversed, but cause, in the specific case of application to two-wheeled vehicles, locking and/or slipping of the driving wheel with a risk of skidding, particularly when the gears are changed down rapidly.

DE-A-1941683 discloses a clutch according to the preamble of claim 1, including helical seats for the transmission of motion between the housing and the hub of a clutch including a plurality of driving and driven friction plates axially compressed by a pressure plate.

There is thus a technical problem of producing a clutch, particularly for two-wheeled vehicles, which is provided with auxiliary means for adjusting the axial load on the plates, making it possible:
- to hold the pressure of the thrust springs down, thus causing a lower load on the clutch disengagement lever;
- to increase the said axial load on the plates as the engine torque increases without making it harder to operate the lever for disengaging the clutch.

Within the scope of this problem, there is a further requirement for the load on the plates to decrease when the torque is reversed, thus reducing the risk of locking of the wheel.

These technical problems are solved according to the present invention by clutch according to claim 1.

Further details can be obtained from the following description of a non-restrictive example of an embodiment of the invention provided with reference to the attached drawings, which show:
- in Figure 1, a sectional view of a first embodiment of the clutch according to the invention;
- in Figure 2, a cross-section in a vertical plane of the housing solidary with the driving shaft;
- in Figure 3, the development in a plane of the housing of Figure 2 mounted on the clutch;
- in Figure 4, a sectional view of a second embodiment of the clutch according to the invention;
- in Figure 5, a sectional view of a variant embodiment of the clutch of Figure 4;
- in Figure 6, a partial cross-section of the thrust slider of the clutch of Figure 5;
- in Figure 7, a sectional view of a third embodiment of the clutch according to the invention, and
- in Figure 8, a partial cross-section of the thrust slider of the clutch of Figure 7.

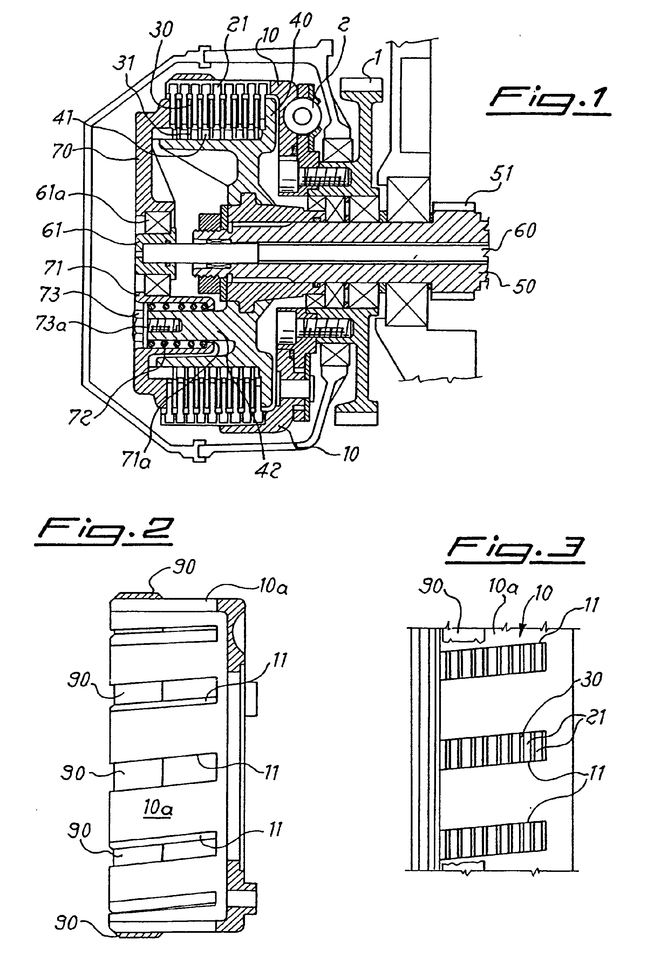

As illustrated in Figure 1, the clutch according to the invention comprises a housing 10 made solidary with the gearing 1 of the motion transmission system (not illustrated) of a motor cycle, with the interposition of a flexible coupling spring 2.

The lateral surface 10a of the housing 10 has seats 11 which house the outer teeth 21 of the plates 20 which are covered in friction material, and which are termed "driving plates" in the following text because they are rotated by the driving shaft.

Between each pair of consecutive plates 20 there is interposed a steel plate 30, provided with inner toothing 31 for coupling to a corresponding radial toothing of the hub 40 of the driven shaft 50 at whose free end there is a toothing 51 for transmission to the drive shaft of the gearbox (not illustrated).

The rod 60 for disengaging the clutch is inserted coaxially into the driven shaft 50, and, when operated by the lever located on the handlebar of the motor cycle, it pushes axially on the pressure plate 70 to which it is coupled by a bush 61 and bearings 61a.

In turn, the said pressure plate 70 comprises seats 71 extending axially inwards and provided with an aperture 71a on the base to permit the entry of an axial projection 42 of the hub 40.

Each seat 71 houses a corresponding thrust spring 72 compressed between the base of the seat and a washer 73a made integral with the axial projection 42 of the hub by means of a screw 73.

According to the invention, the seats 11 of the lateral surface of the housing 10, into which seats the teeth 21 of the plates 20 are inserted, have a helical configuration with respect to the longitudinal axis of the housing.

The mean inclination of the helical profile with respect to the longitudinal axis is in the range from 1° to 30°, preferably from 3° to 6° for dry clutches and from 10° to 20° for oil bath (wet) clutches, and can extend over the whole length of the seat 11 with the direction of the inclination determined by the direction of rotation of the engine.

Thus, as the transmitted torque increases, and consequently as the tangential component transmitted by the housing 10 to the toothing 21 of the driving plates 20 increases, the component of force transmitted in the axial direction by the inclination of the seats 11 also increases, as does the relative compression of the plates 20 and 30, and consequently the torque which can be transmitted by the clutch also increases. Conversely, if the torque is reversed, the inclination of the seats causes a decrease in the axial load on the plates and consequently in the transmissible torque, providing operation as a torque limiter.

Therefore, the particular configuration of the seats of the housing permits a variation of the behaviour of the clutch as a function of the torque transmitted without variation of the axial pressure of the springs, which can consequently be calibrated to relatively low pressure values to maintain a lower pressure in opposition to the operation of the disengagement control lever.

It is also possible for the inclination of the seats 11 of the housing 10 to be provided along only a part of the axial depth of the recess 11, thus making the effect partial.

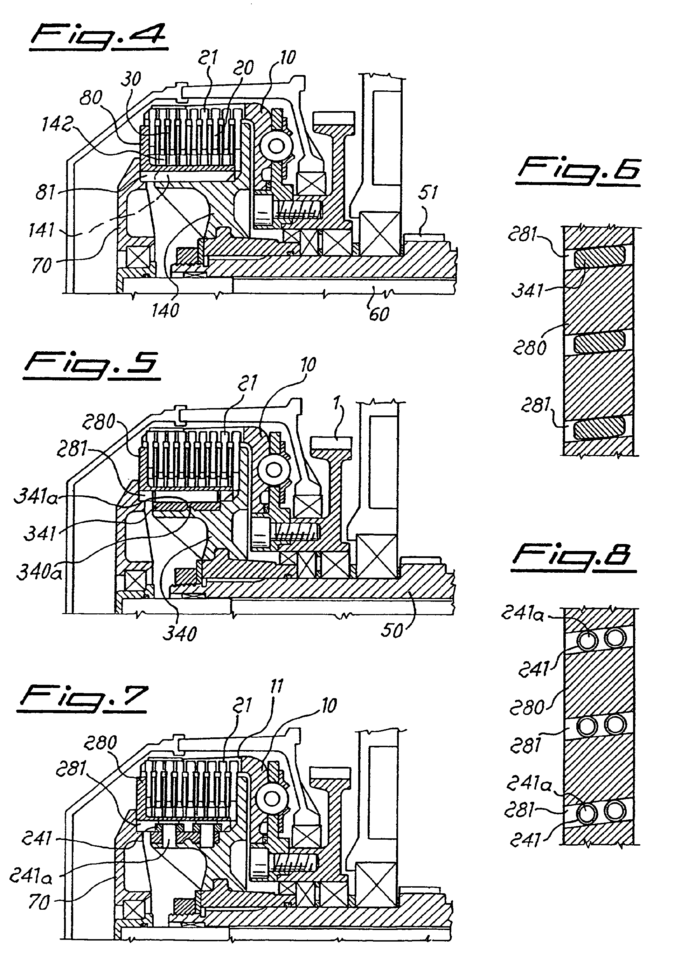

As illustrated in Figure 4, the same effect can be achieved by transferring the helical adjustment profile of the housing 10 to the hub.

In this case, the hub 140 is provided with a helical radial toothing 141, capable of being coupled to a corresponding toothing 81 of a slider 80 interposed between the housing 10 and the hub 140.

The said slider is also provided with an inner toothing 142 for coupling to the toothing 31 of the driven plates 30, and is pushed axially against the hub by the pressure plate 70.

The helical coupling between the hub 140 and the slider 80 causes an increase or decrease in the axial thrust on the plates 20, 30, as the engine torque transmitted by the housing 10 increases or decreases.

Figures 5 and 6 illustrate a variant embodiment of the clutch of Figure 4 in which the helical coupling between the slider 280 and the hub 340 is obtained by means of a toothed bush 341 positioned axially on the said hub 340 by means of a seat 341a interacting with a corresponding radial extension 340a of the hub.

In a further embodiment (Figures 7 and 8), the coupling between the hub 240 and the slider 280 is provided by means of rollers 241 mounted on radial pins 241a solidary with the hub 240; the said rollers are inserted in corresponding axial recesses 281 of the slider 280, which (Figure 8) have a helical development with respect to the axis of rotation of the hub.

The inclination of the said recesses is in the range from 1° to 30°.

Thus, as illustrated in Figure 7, the engine torque transmitted to the housing 10 creates a tangential thrust on the slider 280, whose seats 281, interacting with the rollers 241, resolve the said force, generating an axial component which pushes the slider in the axial direction, thus compressing the plates 20, 30 proportionally to the engine torque to be transmitted.

In a further embodiment, the slider interposed between the housing 10 and the hub 40 is provided with an outer toothing of helical type, of the type described above, for coupling to the driven plates. Consequently the coupling between the slider and the hub can be provided with means which are capable of providing a rectilinear axial sliding and transmission of the torque, such as grooved profiles, tracks with rollers, or the like.

## Claims

1. Clutch comprising:
- a housing (10) connected to a driving shaft and having an axis of rotation;
- a hub (40; 140; 240) fixed to a driven shaft (50, 51);
- a plurality of driving friction plates (20) provided with outer teeth (21);
- a plurality of driven friction plates (30) provided with internal teeth (31) connected for rotation to said hub (40; 140; 240), each of said driven friction plates (30) being interposed between adjacent driving friction plates (20);
- first seats (11) provided on the housing (10) and engaged by the outer teeth (21) of said driving friction plates (30);
- second seats (41; 141; 241) providing transmission of motion between said driven friction plates (30) and said hub (40; 140; 240); and
- a pressure plate (70, 71, 72, 73) for pushing said friction plates (20, 30) in an axial direction,
wherein either said first seats (11) or second seats (41; 141; 241) have an helical shape with an inclination with respect to the axis of rotation of the housing;
**characterized in that**
said inclination is comprised in the range from 3° to 6° for dry clutches and from 10° to 20° for oil bath clutches.

2. Clutch according to Claim 1, **characterized in that** the inclination of the said seats (11; 41; 141; 241) is formed on a limited part of the axial length of each seat.

3. Clutch according to Claim 1, **characterized in that** it comprises a slider (80; 280) interposed between the hub (140; 340; 240) and the driven plates (30) and movable in the axial direction with respect to the hub.

4. Clutch according to Claim 3, **characterized in that** the said slider (80; 280) has outer teeth for coupling to the driven plates (30).

5. Clutch according to Claim 3, **characterized in that** the said slider (80) has a radial inner teeth (81) developed helically for coupling to a corresponding radial teeth (141) of the hub (140).

6. Clutch according to Claim 3, **characterized in that** the said slider (280) has radial seats (281) having a helical axial development.

7. Clutch according to Claim 6, **characterized in that** the said hub (340) carries a toothed bush (341).

8. Clutch according to Claim 7, **characterized in that** the said toothed bush is positioned axially on the hub (340) by means of a seat (341a) which is coupled to a projection (340a) of the hub (340).

9. Clutch according to Claim 6, **characterized in that** the hub (240) has radial elements (241a, 241) which are coupled to the said helical seats (281) of the slider (280).

10. Clutch according to Claim 9, **characterized in that** said radial elements consist of radial pins (241a) fixed to the hub and forming the axis of rotation of rollers (241).

11. Clutch according to Claim 3, **characterized in that** the said slider (80; 280) has an outer helical toothing for coupling to the driven plates and means of coupling in rotation to the hub which are capable of providing a rectilinear axial sliding of the slider.

12. Clutch according to Claim 11, **characterized in that** the helical outer teeth extends over a part of the teeth which is limited in axial direction.

## Patentansprüche

1. Eine Kupplung umfassend:
- ein Gehäuse (10) mit einer Rotationsachse und verbunden mit einer Kurbelwelle;
- eine Nabe (40; 140; 240) befestigt an einer Kurbelwelle (50, 51);
- eine Vielzahl von Mitnehmerbremsscheiben (20), ausgestattet mit äußeren Zähnen (21);
- eine Vielzahl von mitgenommenen Bremsscheiben (30), ausgestattet mit inneren Zähnen (31) verbunden zur Rotation mit der Nabe (40; 140; 240), jede dieser mitgenommenen Bremsscheiben (30) wird eingesetzt zwischen benachbarte Mitnehmerbremsscheiben (20);
- erste Sitze (11) ausgestaltet auf dem Gehäuse (10) und belegt durch die äußeren Zähne (21) der Mitnehmerbremsscheiben (30);
- zweite Sitze (41; 141; 241), die Bewegungsübertragung zwischen den mitgenommenen Bremsscheiben (30) und der Nabe (40; 140; 240) vorsehen; und
- eine Druckplatte (70, 71, 72, 73) zum Drücken der Bremsscheiben (20, 30) in eine axiale Richtung,
wobei entweder die ersten Sitze (11) oder zweite Sitze (41; 141; 241) eine schraubenförmige Form mit einer Steigung in Bezug zu der Rotationsachse des Gehäuses haben;
**dadurch gekennzeichnet, dass**
die Steigung umfasst wird durch den Bereich von 3° bis 6° für trockene Kupplungen und von 10° bis 20° für Ölbadkupplungen.

2. Kupplung nach Anspruch 1, **dadurch gekennzeichnet, dass** die Steigung der Sitze (11; 41; 141; 241) auf einem beschränkten Bereich der axialen Länge jedes Auflagers gebildet ist.

3. Kupplung nach Anspruch 1, **dadurch gekennzeichnet, dass** sie einen Schieber (80; 280) umfasst, eingesetzt zwischen der Nabe (140; 340; 240) und den mitgenommenen Bremsscheiben (30) und beweglich in der axialen Richtung mit Bezug zu der Nabe.

4. Kupplung nach Anspruch 3, **dadurch gekennzeichnet, dass** der Schieber (80; 280) äußere Zähne zum Kuppeln an die mitgenommenen Bremsscheiben (30) hat.

5. Kupplung nach Anspruch 3, **dadurch gekennzeichnet, dass** der Schieber (80) einen radialen, schraubenförmig entwickelten inneren Zahn (81) hat, zum Kuppeln an einen entsprechenden radialen Zahn (141) der Nabe (140).

6. Kupplung nach Anspruch 3, **dadurch gekennzeichnet, dass** der Schieber (280) radiale Sitze (281) hat, die einen schraubenförmigen axialen Aufbau haben.

7. Kupplung nach Anspruch 6, **dadurch gekennzeichnet, dass** die Nabe (340) eine gezahnte Buchse (341) trägt.

8. Kupplung nach Anspruch 7, **dadurch gekennzeichnet, dass** die gezahnte Buchse axial auf der Nabe (340) befestigt ist, mittels eines Sitzes (341 a), welcher an einen Vorsprung (340a) der Nabe (340) gekoppelt ist.

9. Kupplung nach Anspruch 6, **dadurch gekennzeichnet, dass** die Nabe (240) radiale Bauteile (241a, 241) hat, welche mit den schraubenförmigen Sitzen (281) des Schiebers (280) gekoppelt sind.

10. Kupplung nach Anspruch 9, **dadurch gekennzeichnet, dass** die radialen Bauteile aus radialen Pins (241 a) bestehen, die an der Nabe befestigt sind und die Rotationsachse der Rollen (241) bilden.

11. Kupplung nach Anspruch 3, **dadurch gekennzeichnet, dass** der Schieber (80; 280) eine äußere schraubenförmige Verzahnung hat zum Kuppeln an die mitgenommenen Bremsscheiben und Kupplungsmittel in Rotation zu der Nabe, welche in der Lage sind, ein geradliniges axiales Rutschen des Schiebers vorzusehen.

12. Kupplung nach Anspruch 11, **dadurch gekennzeichnet, dass** die schraubenförmigen äußeren Zähne sich über einen Teil der Zähne erstrecken, welche in axialer Richtung beschränkt sind.

## Revendications

1. Embrayage comprenant :
- un boîtier (10) relié à un arbre d'entraînement et présentant un axe de rotation ;
- un moyeu (40 ; 140 ; 240) fixé à un arbre entraîné (50, 51) ;
- une pluralité de disques de frottement d'entraînement (20) munis de dents extérieures (21) ;
- une pluralité de disques de frottement entraînés (30) munis de dents intérieures (31) reliées pour tourner autour dudit moyeu (40 ; 140 ; 240), chacun desdits disques de frottement entraînés (30) étant intercalé entre des disques de frottement d'entraînement adjacents (20) ;
- des premiers supports (11) disposés sur le boîtier (10) et engagés par les dents extérieures (21) desdits disques de frottement d'entraînement (30) ;
- des seconds supports (41 ; 141 ; 241) assurant la transmission du mouvement entre lesdits disques de frottement entraînés (30) et ledit moyeu (40 ; 140 ; 240) : et
- un disque de compression (70, 71, 72, 73) permettant de pousser lesdits disques de frottement (20, 30) dans une direction axiale,
dans lequel soit lesdits premiers supports (11) soit les seconds supports (41 ; 141 ; 241) prennent une forme hélicoïdale avec une inclinaison par rapport à l'axe de rotation du boîtier ;
**caractérisé en ce que**
ladite inclinaison est comprise entre 3° et 6° pour des embrayages à sec et entre 10° et 20° pour des embrayages à bain d'huile.

2. Embrayage selon la revendication 1, **caractérisé en ce que** l'inclinaison desdits supports (11 ; 41 ; 141 ; 241) est formée sur une partie limitée de la longueur axiale de chaque support.

3. Embrayage selon la revendication 1, **caractérisé en ce qu'**il comprend un coulisseau (80 ; 280) intercalé entre le moyeu (140 ; 340 ; 240) et les disques entraînés (30) et pouvant se déplacer dans la direction axiale par rapport au moyeu.

4. Embrayage selon la revendication 3, **caractérisé en ce que** ledit coulisseau (80 ; 280) possède des dents extérieures permettant de se coupler aux disques entraînés (30).

5. Embrayage selon la revendication 3, **caractérisé en ce que** ledit coulisseau (80) possède des dents intérieures radiales (81) développées de manière hélicoïdale permettant de se coupler à des dents radiales correspondantes (141) du moyeu (140).

6. Embrayage selon la revendication 3, **caractérisé en ce que** ledit coulisseau (280) possède des supports radiaux (281) présentant un développement axial hélicoïdal.

7. Embrayage selon la revendication 6, **caractérisé en ce que** ledit moyeu (340) supporte un manchon denté (341).

8. Embrayage selon la revendication 7, **caractérisé en ce que** ledit manchon denté est positionné de manière axiale sur le moyeu (340) à l'aide d'un support (341a) qui est couplé à une saillie (340a) du moyeu (340).

9. Embrayage selon la revendication 6, **caractérisé en ce que** le moyeu (240) possède des éléments radiaux (241a, 241) qui sont couplés auxdits supports hélicoïdaux (281) du coulisseau (280).

10. Embrayage selon la revendication 9, **caractérisé en ce que** lesdits éléments radiaux sont constitués de goupilles radiales (241a) fixés au moyeu et formant l'axe de rotation des rouleaux (241).

11. Embrayage selon la revendication 3, **caractérisé en ce que** ledit coulisseau (80 ; 280) possède une denture hélicoïdale extérieure permettant de se coupler aux disques entraînés, et des moyens d'accouplement en rotation autour du moyeu qui sont capables de faire coulisser le coulisseau de manière axiale rectiligne.

12. Embrayage selon la revendication 11, **caractérisé en ce que** les dents extérieures hélicoïdales s'étendent sur une partie des dents qui est limitée dans la direction axiale.
